# EUROPEAN PATENT SPECIFICATION

(11) **EP 4 368 954 B1**
(45) Date of publication and mention of the grant of the patent: **28.10.2026**
(21) Application number: 23160910.8
(22) Date of filing: 09.03.2023
(51) Int. Cl.: G01J 5/02, G01J 5/04, G01J 5/48, G01K 13/20, G01J 5/00

(54) **MULTI-SENSOR SYNCHRONOUS NON-CONTACT MEASURING PROBE OF AN INFRARED THERMOMETER**
SYNCHRONE KONTAKTLOSE MEHRSENSOR-MESSSONDE EINES INFRAROTTHERMOMETERS
SONDE DE MESURE SANS CONTACT SYNCHRONE MULTICAPTEUR DE THERMOMÈTRE INFRAROUGE

(30) Priority: 14.11.2022 CN 202223019572 U
(43) Date of publication of application: 15.05.2024
(73) Proprietor: Famidoc Technology Co., Ltd, Dongguan 523853 Guangdong Province (CN)
(72) Inventor: Cao, Liang, Shenzhen (CN)
(74) Representative: Cleanthous, Marinos

(56) References cited:
- EP-A1- 3 026 406
- WO-A1-2018/075964
- WO-A2-2007/054821
- CN-U- 208 048 718
- GB-A- 2 343 246

## Description

### TECHNICAL FIELD

The present disclosure relates to the technical field of infrared thermometers, in particular to a multi-sensor synchronous non-contact measuring probe of an infrared thermometer.

### BACKGROUND

It is well-known that according to the law of blackbody radiation, all objects above absolute zero in nature are constantly radiating energy outward. The magnitude of the outward radiating energy of an object and the distribution thereof by wavelength are closely related to the surface temperature thereof. The higher the temperature of an object, the stronger the infrared radiation ability that the object emits.

The infrared thermometer uses an infrared receiving sensor to acquire the infrared radiation emitted by the human skin surface, accurately measures the human skin temperature, and cooperates with an internal algorithm of the thermometer to correct the temperature difference between the forehead and the actual human body temperature, thus obtaining the accurate human body temperature.

Non-contact measurement is generally used for the external surface test of a human body such as the forehead. In order to achieve non-contact measurement, it is necessary to control the object distance ratio of a product to prevent the measurement area from being too large and exceeding the measurement target when the distance is too far, that is, it is necessary to control the acquisition optical path of the sensor.

At present, all the existing measuring probes of infrared thermometers carry out measurement using a single sensor, and the temperature values measured by infrared thermometers often depend entirely on the results measured by this single sensor. However, the range of the human body skin surface detected by a single sensor is small and limited. In the process of actual use, the temperature measured value often changes because of the change of the detected position. This will cause the existing infrared thermometer to carry out measurement repeatedly for many times, and then the middle value is taken, so that the measured results are inaccurate.

EP3026406A1 discloses a chip (100) for radiation measurements. The chip includes a first substrate (110) comprising a first sensor (111) and a second sensor (116). The chip (100) moreover comprises a second substrate (120) comprising a first cavity (121) and a second cavity (126) both with oblique walls. An internal layer (128) is present on the inside of the second cavity (126). The second substrate (120) is sealed to the first substrate with the cavities (121, 126) on the inside such that the first cavity (121) is above the first sensor (111) and the second cavity (126) is above the second sensor (116).

WO2018075964A1 discloses an infrared (IR) imaging system for determining a concentration of a target species in an object. The imaging system can include an optical system including an optical focal plane array (FPA) unit. The optical system can have components defining at least two optical channels thereof, said at least two optical channels being spatially and spectrally different from one another. Each of the at least two optical channels can be positioned to transfer IR radiation incident on the optical system towards the optical FPA. The system can include a processing unit containing a processor that can be configured to acquire multispectral optical data representing said target species from the IR radiation received at the optical FPA.

CN208048718U discloses a temperature measuring device adopting a plurality of infrared sensors. The temperature measuring device includes a housing, the infrared sensors arranged in the casing, a main control circuit board unit is the main control circuit board and integrated in the main control circuit board's master control MCU, a signal acquisition circuit, a display screen, and a power and control button. The infrared sensors who locate in the housing includes at least two, and all infrared sensors side by side and in parallel set up in the housing, perhaps some infrared sensors arranged with all the other part infrared sensor slopes, and a front end of two parts infrared sensors forms an angle.

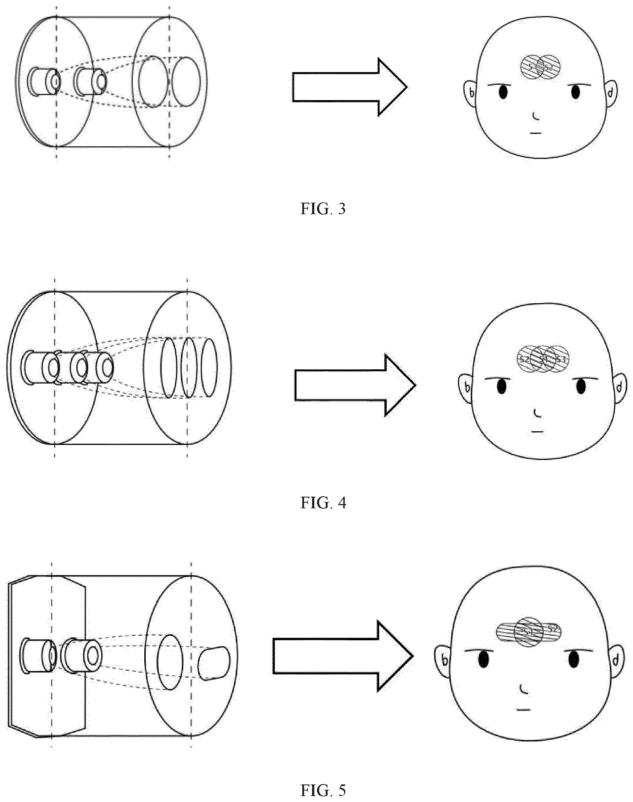

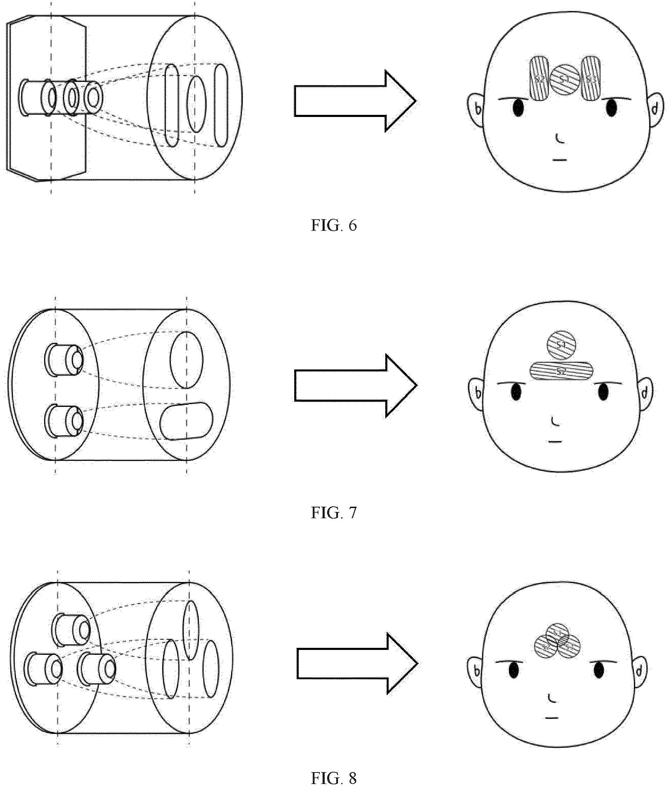

GB2343246A discloses a temperature sensing device suitable for sensing food temperature inside an oven during cooking, converts incident infrared light from the food to an electrical signal. The sensor has a cap 20 that avoids contamination of the sensor element 30, 32 in use and accurate collection of the required infrared light. The cap 20 has a sensing hole 22 in its upper portion to allow the infrared light to the sensor element 32 in a lower portion. The cap 20 may have an antireflective coating 24 on an inside surface and a heat shield (40 fig 5) on the outer surface. The cap is preferable made of a high heat conducting material and may have features such as small holes 22 which may be made conical 28 (D2 fig 8) to direct only required infrared light to the sensor.

WO2007054821A2 discloses a device (100) for measuring a patient's temperature using an infrared thermometer (1) to detect the intensity of an infrared radiation coming from the body of that patient, whose temperature is wished to be known; the device further comprises a room-temperature sensor to send said temperature to a memory (38). A processing unit (33) receives as an input the room- temperature signal (B) and a temperature signal (A) proportional to the infrared radiation, the room- temperature signal (B) enabling the processing unit (33) to determine a corrective parameter to rectify the temperature (A) detected by the sensor member (7) and to determine the patient's real temperature.

### SUMMARY

Aiming at the shortcomings in the prior art, the present disclosure aims to provide a multi-sensor synchronous non-contact measuring probe of an infrared thermometer.

In order to achieve the above purpose, the present invention uses the following technical scheme, as defined by claim 1. Further advantageous embodiments of the present invention are defined by the dependent claims.

Due to the use of the above scheme, the present disclosure uses a plurality of infrared sensors to synchronously detect the skin temperature of a human body, and corresponding compensation is carried out depending on temperature values detected by the plurality of infrared sensors, so that a final value of the human body temperature detection is obtained, and the accuracy of human body temperature detection is effectively improved.

### BRIEF DESCRIPTION OF THE DRAWINGS

FIG. 1 is a schematic structural diagram of an example of the present disclosure, not falling within the scope of the appended claims
FIG. 2 is a schematic diagram of a circuit structure of an MCU chip according to an embodiment of the present disclosure.
FIG. 3 and FIG. 4 are schematic structural diagrams of a central symmetric bisecting optical path design according to an example of the present disclosure, not falling within the scope of the appended claims.
FIG. 5 and FIG. 6 are schematic structural diagrams of a left-right compensation optical path design according to an embodiment of the present disclosure.
FIG. 7 and FIG. 8 are schematic structural diagrams of a down-compensation optical path design according to an embodiment and an example of the present disclosure, wherein the example according to figure 8 does not fall within the scope of the appended claims .
FIG. 9 is a schematic structural diagram of four specific forms of optical channels according to an embodiment of the present disclosure.

### DETAILED DESCRIPTION OF THE EMBODIMENTS

In order to make the object, the technical scheme and advantages of the present disclosure clearer, the present disclosure will be described in detail hereinafter with reference to drawings and embodiments. It should be understood that the specific embodiments described here are only used to explain the present disclosure, rather than limit the present disclosure.

In the description of the present disclosure, it should be understood that the orientational or positional relationships indicated by the terms such as "center", "longitudinal", "transverse", "length", "width", "thickness", "up", "down", "front", "back", "left", "right", "vertical", "horizontal", "top", "bottom", "inside", "outside", "clockwise", "counterclockwise" are based on the orientational or positional relationships shown in the drawings only for the convenience of describing the present disclosure and simplifying the description, rather than indicate or imply that the referred devices or elements must have a specific orientation, be constructed and operated in a specific orientation, and therefore should not be construed as limiting the present disclosure. In addition, the terms such as "first" and "second" are only used for the purpose of description, and cannot be understood as indicating or implying relative importance or implicitly indicating the number of indicated technical features. Therefore, the features defined with "first" and "second" can include one or more of the features explicitly or implicitly. In the description of the present disclosure, "a plurality of" means two or more, unless otherwise specifically defined.

In the description of the present disclosure, it should be noted that, unless otherwise specified and defined expressly, the terms such as "install", "link" and "connect" should be understood broadly, for example, it can be fixed connection, detachable connection or integral connection; or mechanical connection or electrical connection; or direct connection or indirect connection through an intermediate medium, or internal communication between two elements or interaction between two elements. For those skilled in the art, the specific meanings of the above terms in the present disclosure can be understood according to specific situations.

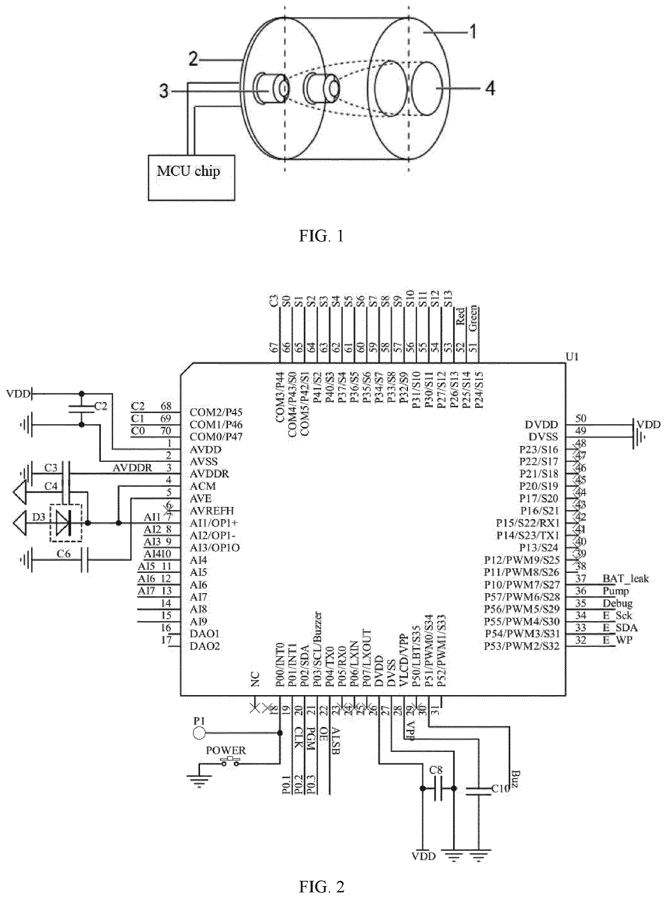

As shown in FIG. 1 to FIG. 9, a multi-sensor synchronous non-contact measuring probe of an infrared thermometer provided by this embodiment comprises a sensor fixing sleeve 1 and a pressing block 2 arranged at the inner end of the sensor fixing sleeve 1. At least two infrared sensors 3 are arranged on the pressing block 2. The sensor fixing sleeve 1 is provided with optical channels 4 with the same number as that of the infrared sensors 3. The detection surface of each of the infrared sensors 3 is interfaced with a corresponding optical channel 4. The infrared sensors 3 are connected with MCU chips. The infrared sensor 3 can convert an infrared signal within the measurement target range into an electrical signal and send the signal to the MCU chip. The model of the MCU chip is XWIC028, which is provided with an MCU with a high-precision ADC. After acquiring the measurement signal, the MCU chip acquires the electrical signal output by the sensor through the ADC, respectively, and converts it into the corresponding target temperature through program setting. The two temperatures are then used as input to generate a final temperature through a compensation algorithm, and then the final temperature is displayed through an LCD. The compensation algorithm can be the average of two target temperatures.

In this embodiment, a plurality of infrared sensors 3 are used to synchronously detect the skin temperature of a human body, and corresponding compensation is carried out depending on temperature values detected by the plurality of infrared sensors 3, so that a final value of the human body temperature detection is obtained, and the accuracy of human body temperature detection is effectively improved.

Further, the optical channels 4 of each of the infrared sensors 3 in this embodiment are arranged in parallel with each other, so that the detection areas obtained by the infrared sensors 3 are staggered or have overlapping edges; alternatively, the optical channels 4 of each of the infrared sensors 3 are arranged at an oblique angle, so that the centers of the detection areas obtained by the infrared sensors 3 are overlapped with each other.

In order to further illustrate the common structural design of the plurality of sensors in this embodiment, two and three sensors are specifically used for description.

The central symmetric bisecting optical path design is as follows. Two infrared sensors 3 use the same optical path and are bilaterally symmetrically installed on the probe according to the center position of the temperature measuring probe, as shown in FIG. 3 and FIG. 4. Two or three infrared sensors 3 are equally distributed on the left and right sides according to the center line of the temperature measuring probe, and the optical channels 4 of the two sensors are the same. During measurement, the measuring target range is evenly distributed on the left and right sides. At the same, the forehead area is limited, and the measuring targets of the two sensors overlap slightly, so that the center position can be included in both sensors to ensure that the center position is only measured when the effect of temperature measurement is not worse than that of a single sensor on the market at present.

The left-right compensation optical path design is as follows. Two sensors use different optical paths, which are placed at a certain included angle on the left and right sides (that is, the optical channels of each of the infrared sensors are arranged at an oblique angle), as shown in FIG. 5. The two sensors use different optical paths. One of the two sensors is used as a main detection sensor S1, and the other of the two sensors is used as a compensation sensor S2. The acquisition area of the main sensor after passing through the optical path is circular, which is the same as the conventional single sensor on the market at present. The acquisition area of the other compensation sensor after being designed with the optical path is elongated, which is used to obtain the position of forehead blood vessels and compensate for the temperature measurement results.

When the optical path design is to select three sensors for left-right compensation, the infrared sensors 3 located on both sides use the same optical path, that is, as compensation sensors S2 and S3, while the infrared sensor located in the middle uses another optical path, that is, as the main detection sensor S1, as shown in FIG. 6. The specific principle is the same as the optical path design of the left-right compensation described above.

The down-compensation optical path design is as follows. Two sensors use different optical paths, which are placed on the center line from top to bottom, as shown in FIG. 7. The two sensors 3 use different optical paths. One of the two sensors is used as a main detection sensor S1, and the other of the two sensors is used as a compensation sensor S2. The acquisition area of the main sensor after passing through the optical path is circular, which is the same as the conventional single sensor on the market at present. The acquisition area of the other compensation sensor after being designed with the optical path is elongated, which is used to obtain the position of blood vessels below the target area and compensate for the temperature measurement results.

The three sensors use the same optical path, and use the projection mode with the center connecting line as a regular triangle, as shown in FIG. 8. One of the sensors which is located in the upper part is used as a main detection sensor. The acquisition area is circular, which is the same as the conventional single sensor on the market at present. The other two sensors are used as compensation sensors, which are used to obtain the position of blood vessels below the target area and compensate for the temperature measurement results.

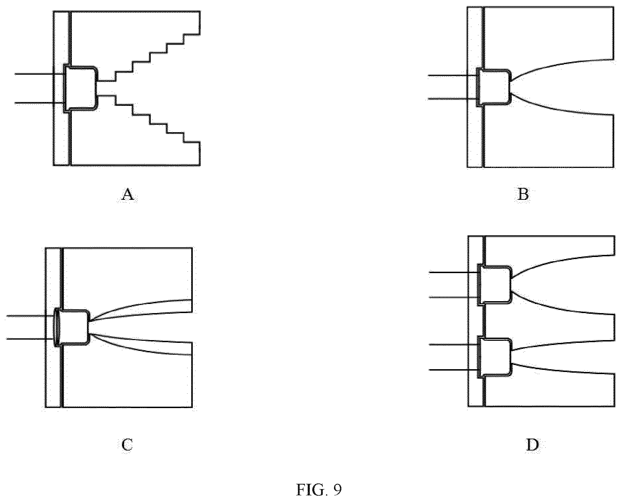

As for the specific form of the optical channel 4, four structural forms as shown in FIG. 9 can be used. The specific shape can be another of a parabola, a triangle, an ellipse and a step or the combination thereof.

Further, the pressing block 2 in this embodiment is a hardware plate, which is mainly used to fix the infrared sensor 3 and is locked on the sensor fixing sleeve 1 through screw holes. At the same time, in order to ensure the temperature balance of the infrared sensor 3, the pressing block is generally made of hardware (such as copper, stainless steel, zinc alloy, etc.). At the same time, in order to ensure a good heat preservation effect, the pressing block needs to keep close contact with the infrared sensor.

The above are only illustrative examples and selected preferred embodiments of the present invention. The patent scope of the present invention is defined by the appended claims.

## Claims

1. A multi-sensor synchronous non-contact measuring probe of an infrared thermometer, comprising a sensor fixing sleeve (1) and a pressing block (2) arranged at the inner end of the sensor fixing sleeve (1), wherein at least two infrared sensors (3) are arranged on the pressing block (2), the sensor fixing sleeve (1) is provided with optical channels (4) with the same number as that of the infrared sensors (3), the detection surface of each of the infrared sensors (3) is interfaced with a corresponding optical channel (4), and the infrared sensors (3) are connected with MCU chips; wherein the pressing block (2) is a hardware plate fixedly installed on the inner end of the sensor fixing sleeve (1) through fasteners; wherein one of the infrared sensors acts as a main detection sensor whose acquisition area after passing through the optical path is circular, and at least one other of the infrared sensors acts as a compensation sensor whose acquisition area after passing through the optical path is elongated.

2. The multi-sensor synchronous non-contact measuring probe of an infrared thermometer according to claim 1, wherein the optical channels (4) of each of the infrared sensors (3) are arranged at an oblique angle, so that the centers of the detection areas obtained by the infrared sensors (3) are overlapped with each other.

3. The multi-sensor synchronous non-contact measuring probe of an infrared thermometer according to claim 1, wherein the optical channel (4) is parabolic or triangular, elliptical or stepped.

## Patentansprüche

1. Berührungslose synchrone Mehrsensor-Messsonde eines Infrarotthermometers, umfassend eine Sensorbefestigungshülse (1) und einen am inneren Ende der Sensorbefestigungshülse (1) angeordneten Andruckblock (2), wobei an dem Andruckblock (2) mindestens zwei Infrarotsensoren (3) angeordnet sind, wobei die Sensorbefestigungshülse (1) mit optischen Kanälen (4) versehen ist, deren Anzahl der Anzahl der Infrarotsensoren (3) entspricht, wobei die Detektionsfläche jedes der Infrarotsensoren (3) mit einem entsprechenden optischen Kanal (4) gekoppelt ist und die Infrarotsensoren (3) mit MCU-Chips verbunden sind;
wobei der Andruckblock (2) eine Metallplatte ist, die mittels Befestigungselementen fest am inneren Ende der Sensorbefestigungshülse (1) angebracht ist; wobei einer der Infrarotsensoren als Hauptdetektionssensor dient, dessen Erfassungsbereich nach Durchlaufen des optischen Pfades kreisförmig ist, und mindestens ein anderer der Infrarotsensoren als Kompensationssensor dient, dessen Erfassungsbereich nach Durchlaufen des optischen Pfades langgestreckt ist.

2. Berührungslose synchrone Mehrsensor-Messsonde eines Infrarotthermometers nach Anspruch 1, wobei die den Infrarotsensoren (3) jeweils zugeordneten optischen Kanäle (4) schräg angeordnet sind, sodass die Mittelpunkte der von den Infrarotsensoren (3) erhaltenen Detektionsbereiche zusammenfallen.

3. Berührungslose synchrone Mehrsensor-Messsonde eines Infrarotthermometers nach Anspruch 1, wobei der optische Kanal (4) parabelförmig, dreieckig, elliptisch oder stufenförmig ist.

## Revendications

1. Sonde de mesure sans contact synchrone à multi-capteur pour un thermomètre infrarouge, comprenant un manchon de fixation de capteur (1) et un bloc de pression (2) agencé à une extrémité intérieure du manchon de fixation de capteur (1), dans laquelle au moins deux capteurs infrarouges (3) sont agencés sur le bloc de pression (2), le manchon de fixation de capteur (1) est pourvu des canaux optiques (4) au nombre égal à celui des capteurs infrarouges (3), une surface de détection de chacun des capteurs infrarouges (3) est en interface avec un canal optique (4) correspondant, et les capteurs infrarouges (3) sont connectés à des puces MCU ; dans laquelle
le bloc de pression (2) est une plaque matérielle montée de manière fixe sur l'extrémité intérieure du manchon de fixation de capteur (1) par l'intermédiaire des éléments de serrage ; dans lequel l'un des capteurs infrarouges sert de capteur de détection principal dont une zone de capture, une fois passée par le trajet optique, est circulaire, et au moins un autre des capteurs infrarouges sert de capteur de compensation dont une zone de capture, une fois passée par le trajet optique, est allongée.

2. Sonde de mesure sans contact synchrone à multi-capteur pour un thermomètre infrarouge selon la revendication 1, dans laquelle les canaux optiques (4) de chacun des capteurs infrarouges (3) sont agencés à un angle oblique, de sorte que les centres des zones de détection obtenues par les capteurs infrarouges (3) se chevauchent.

3. Sonde de mesure sans contact synchrone à multi-capteur pour un thermomètre infrarouge selon la revendication 1, dans laquelle le canal optique (4) est parabolique, triangulaire, elliptique ou en escalier.
